# EUROPEAN PATENT SPECIFICATION

(11) **EP 1 658 459 B1**
(45) Date of publication and mention of the grant of the patent: **07.05.2014**
(21) Application number: 04780711.0
(22) Date of filing: 11.08.2004
(51) Int. Cl.: F16L 15/00, F16L 57/00

(54) **METHODS FOR PROTECTING A THREADED PORTION OF A TUBULAR MEMBER**
VERFAHREN ZUM SCHÜTZEN EINES GEWINDETEILS EINES RÖHRENFÖRMIGEN GLIEDS
PROTECTION DE LA PARTIE FILETEE D'UN ELEMENT TUBULAIRE

(30) Priority: 28.08.2003 US 498500 P; 06.01.2004 US 752161
(43) Date of publication of application: 24.05.2006
(73) Proprietor: Drilltec Patents & Technologies Company, Inc., Houston, Texas 77043 (US)
(72) Inventor: CASTERAN, Bernard, F-78960 Voisins-Le-Bretonneux (FR)
(74) Representative: Schwan - Schwan - Schorer
(86) International application number: PCT/US2004/025920
(87) International publication number: WO 2005/024282

(56) References cited:
- US-A- 3 918 578
- US-A- 4 210 179
- US-A- 4 429 719
- US-A- 4 582 090
- US-A- 4 582 090
- US-A- 4 733 888
- US-A- 5 185 665
- US-A- 5 303 743
- Barku - Schutzmuffe Drw n° 835 2 001 / 835 2 001 0 / 835 2 002 0 / 835 2 002 3 / 835 2 030 0 / 835 8 001 0

## Description

### BACKGROUND OF THE INVENTION

### Field of the Invention

The invention relates generally to a method for protecting a threaded portion of a tubular member. More particularly, the invention relates to a method for protecting a threaded portion using a thread protector having a seal that engages the outer surfaces of the thread protector and tubular member to prevent liquids and debris from contaminating the threaded portion.

### Description of the Related Art

Threaded portions of tubular members are commonly protected during shipment and handling through the use of thread protectors. These thread protectors generally serve to prevent debris from collecting within the tubular member and to protect the threaded and machined end surfaces from damage caused during handling. Some thread protectors seek to prevent debris from bypassing the pin by maintaining a sufficiently close, but not sealed, engagement with the surfaces of the tubular member. Other thread protectors sealingly engage the tubular members by utilizing machined sealing surfaces integral to the threads on the tubular member, but not all threads have an available sealing surface. Maintaining a sealing engagement with the external surface of a typical tubular presents unique challenges because the tubular surface is often left in an as-rolled condition. The as-rolled condition is characterized by a rough surface finish and irregular diameter, which makes maintaining a sealing engagement difficult.

In US 4,429,719 a pipe thread protector is disclosed which includes two members, one slidably constrained within the other. The interior member has a guide section which includes internal ridges adapted to engage the threads of a pipe section. US 3,918,578 discloses a desiccant end cap for mounting on a hollow cylindrical member. The cap has an annular flange with a face portion and an outer annular portion extending transversely thereto comprising a cup-like member.

US4,582,090 discloses a tubular member with threads and a thread protector comprising a body having an open end, a closed end, and an outer surface; wherein the closed end comprises a seal engaging a leading edge of the tubular member and the open end defines an aperture adapted to engage the threads of the tubular member.

In addition to thread protectors, a pipe dope or coating is often applied to threaded portions of tubular members after manufacturing but before shipping the tubular members. This coating is needed because typical thread protectors do not provide a seal that is effective enough to prevent environmental conditions from corroding the threaded portions. In addition, typical thread protectors disturb the coating when they are removed, necessitating replacement of the coating before the threaded portion of the tubular member can be connected to an additional tubular member.

Thus, there remains a need for a method of protecting a threaded portion of a tubular member by sealingly engaging a non-machined surface of a tubular member. There further remains a need for sealingly engaging a non-machined surface of a tubular member in a manner that isolates the threaded portion of the tubular member from the environment so as to help prevent corrosion of the threaded portions without the use of pipe dope or coatings. There further remains a need for installing or removing a thread protector without adversely affecting or substantially degrading a pipe dope or coating on the threaded portions when the thread protector is installed or removed.

Thus, the embodiments of the present invention are directed towards methods for protecting a threaded end of a tubular member and methods for manufacturing and shipping tubular members that seek to overcome these and other limitations of the prior art.

### SUMMARY OF THE PREFERRED EMBODIMENTS

The preferred embodiments are directed toward methods according to claim 1, for protecting a threaded end of a tubular member. Embodiments of the present invention relate to methods for protecting a threaded end of a tubular member and sealingly engaging the tubular member to prevent liquid or debris contamination of the threaded end. In the preferred embodiments, the methods comprise the use of a tubular member thread protector that includes a protector body having an open end providing access to an interior and a closed end. The open end is adapted to accept the threaded end portion of the tubular member. The exterior surface of the protector body has a seal groove located proximate to the open end of the protector. A compliant seal is adapted to attach to the seal groove on the body and extend over the open end of the body and sealingly engage the outer surface of the tubular member.

In one embodiment, a method for protecting a threaded end of a tubular member comprises installing a thread protector having a protector body having a closed end and an open end connected by a wall having an inner surface and an outer surface. The open end of the thread protector defines an aperture adapted to engage the threaded end of the tubular member, and a seal member that engages the outer surface of the protector body may be installed. The seal member covers the open end of the protector body and projects into the aperture into sealing engagement with the tubular member. In this embodiment, the thread protector isolates the threaded portions from the environment so that no pipe dope or coating is needed to prevent corrosion of the threaded portions.

In certain embodiments, the seal member and thread protector are installed simultaneously. In other embodiments, the thread protector is installed before the seal member is installed. The seal member may also be removed from the protector body without removing the thread protector from the tubular member so that a replacement seal member can be installed on the protector body.

In another embodiment, a method of manufacturing a tubular member comprises installing a thread protector. In this embodiment, the thread protector is installed while the tubular member is in the clean environment of the manufacturing facility. In other embodiments, a method of shipping a tubular member comprises installing a thread protector on a threaded portion that may or may not be coated.

Thus, the present invention comprises a combination of features and advantages that provide an improved method for protecting the threaded portion of a tubular member and for manufacturing and shipping threaded tubular members. These and various other characteristics and advantages of the preferred embodiments will be readily apparent to those skilled in the art upon reading the following detailed description and by referring to the accompanying drawings.

### BRIEF DESCRIPTION OF THE DRAWINGS

For a more detailed description of the preferred embodiments of the present invention, reference will now be made to the accompanying drawings, wherein:
Figure 1 is a partial cross-sectional view of one embodiment comprising a sealing thread protector on the pin end of a tubular member;
Figure 2 is a partial cross-sectional view of the thread protector of Figure 1 engaged with a tubular member of minimum diameter;
Figure 3 is a partial cross-sectional view of the thread protector of Figure 1 engaged with a tubular member of maximum diameter; and
Figure 4 is a partial cross-sectional view of one embodiment not forming part of the invention, comprising a sealing thread protector in the box end of a tubular member.

### DESCRIPTION OF EXEMPLARY PREFERRED EMBODIMENTS

In the description that follows, like parts are marked throughout the specification and drawings with the same reference numerals, respectively. The drawing figures are not necessarily to scale. Certain features of the invention may be shown exaggerated in scale or in somewhat schematic form. Some details of conventional elements may not be shown in the interest of clarity and conciseness. The present invention is susceptible to embodiments of different forms. There are shown in the drawings, and herein will be described in detail, specific embodiments of the present invention with the understanding that the present disclosure is to be considered an exemplification of the principles of the invention, and is not intended to limit the invention to that illustrated and described herein. It is to be fully recognized that the different teachings of the embodiments discussed below may be employed separately or in any suitable combination to produce the desired results.

In particular, various embodiments described herein thus comprise a combination of features and advantages that overcome some of the deficiencies or shortcomings of prior methods of protecting threaded portions of tubular members, as well as manufacturing and shipping threaded tubular members. The various characteristics mentioned above, as well as other features and characteristics described in more detail below, will be readily apparent to those skilled in the art upon reading the following detailed description of preferred embodiments, and by referring to the accompanying drawings.

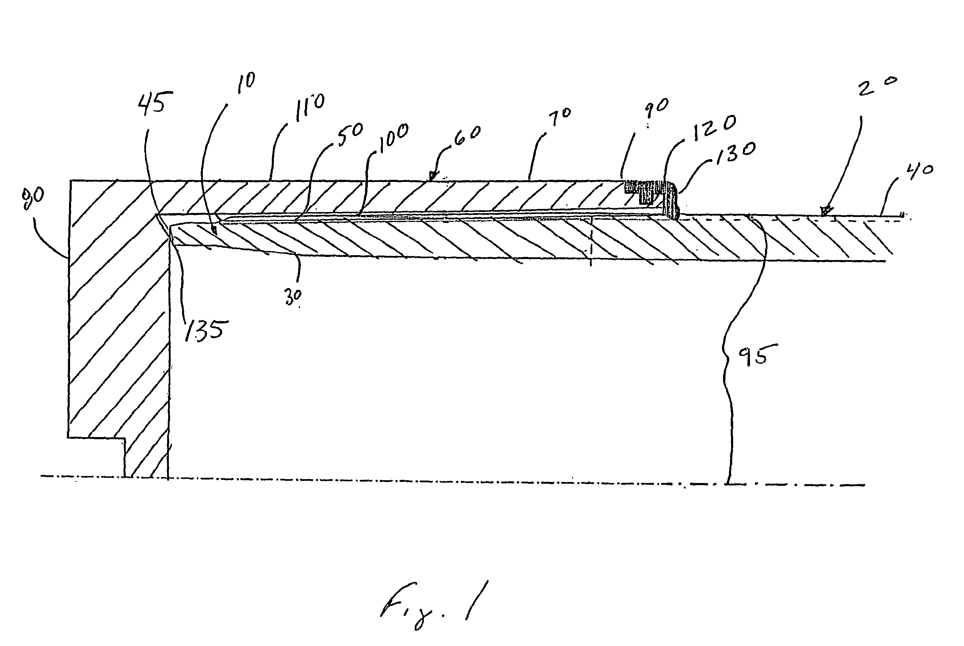

The preferred embodiments of the present invention comprise methods of using a thread protector having features aimed at preventing the contamination of the threaded portion or threads by external liquids or debris. Figure 1 illustrates the pin end 10 of a tubular member 20. Tubular member 20 has an interior surface 30 and an exterior surface 40, including a threaded portion with threads 50. A thread protector 60 is disposed about the pin end 10. Thread protector 60 is preferably constructed from a durable material suitable to protect the pin end 10 and threads 50 from damage during handling. Thread protector 60 includes a protector body 70 having a closed end 80 and an open end 90 defining an aperture 95. Protector body 70 preferably has internal threads 100 adapted to engage threads 50. The external surface 110 or protector body 70 has a seal groove 120 disposed near open end 90. Seal 130 attaches to seal groove 120 and extends around the open end 90 into aperture 95 to engage the exterior surface 40 of tubular member 20. Thread protector 60 preferably has seal 135 on closed end 80 to engage leading edge 45 of pin end 10. Seals 130 and 135 isolate threads 50 from the outside environment and prevent external liquids or debris from contacting threads 50.

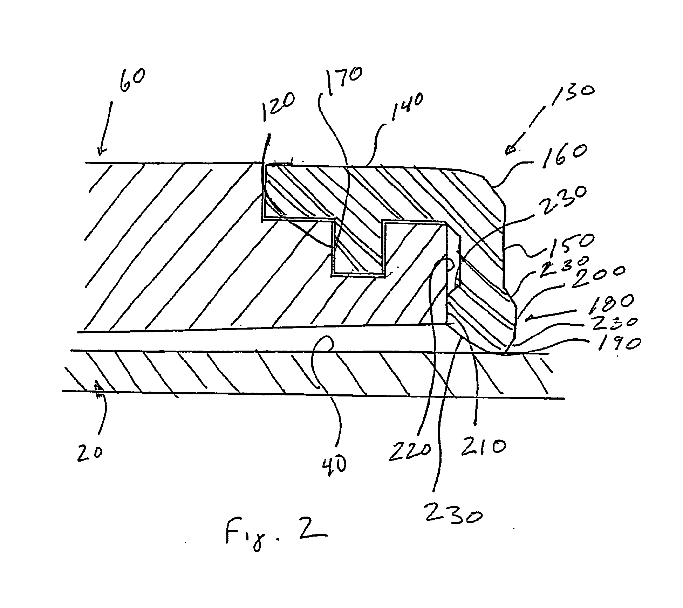

Referring now to Figure 2, the interface between tubular member 20, thread protector 60, and seal 130 is shown engaged with a tubular member of minimum outer diameter. Seal 130 includes axial portion 140 and radial portion 150, which intersect at junction 160. Axial portion 140 extends in a direction substantially parallel with protector body 70. Tab 170 extends radially from axial portion 140 and engages seal groove 120. Radial portion 150 extends from junction 160 inward toward the exterior surface 40 of tubular member 20. Radial portion 150 includes an increased thickness sealing lip 180 that engages the exterior surface 40 of tubular member 20.

Sealing lip 180 includes sealing surface 190, outside surface 200, and inside surface 210. Sealing surface 190 engages the exterior surface 40 of tubular member 20. Sealing surface 190 projects a sufficient distance from junction 160 so that sealing surface 190 will engage an exterior surface 40 within a predetermined tolerance range. Outside surface 200 projects above the outer surface of radial portion 150. Inside surface 210 extends beyond the inner surface of radial portion 150 and contacts the face 220 of protector body 70. Corners 230 between surfaces 190, 200, 210 and the inner and outer surfaces of radial portion 150 are filleted, radiused, or otherwise contoured to provide smooth transitions between the surfaces.

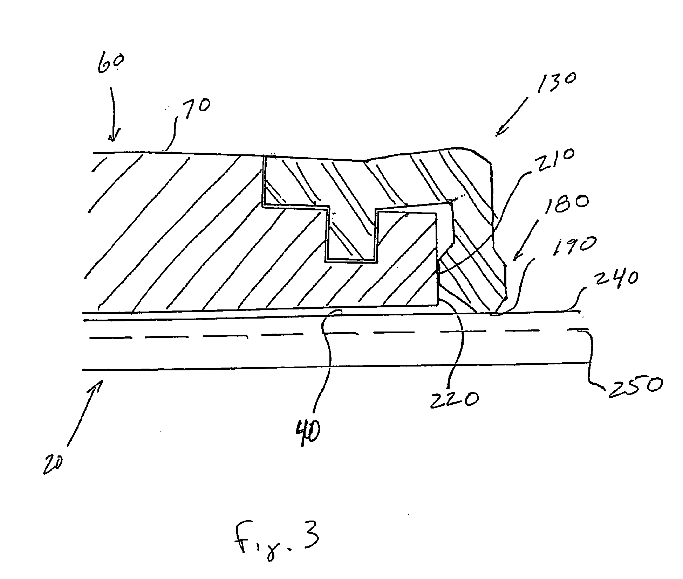

Referring now to Figure 3, when seal 130 and thread protector 60 are installed on tubular member 20, seal 130 extends past the inside of protector body 70 to contact the exterior surface 40 or tubular member 20. Seal 130 extends a sufficient distance such that it will engage exterior surface 40 at any diameter between its maximum diameter 240 and its minimum diameter 250. Inside surface 210 of sealing lip 180 bears against face 220 of protector body 70 and provides axial support for seal 130. Thus, seal 130 provides a barrier that prevents external liquids and debris from the outside environment from contaminating the pin end 10 of tubular member 20.

Seal 130 is preferably constructed from rubber or another composite material sufficiently compliant so as to effectuate a sealing engagement with tubular member 20 but also of sufficient resiliency so as to maintain that sealing engagement over the allowable range of diameters of the exterior surface 40. The engagement between seal 130 and exterior surface 40 is maintained by the shape of seal 130 compressing sealing lip 180 against surface 40. Because seal 130 is not compressed between two non-compliant members (such as tubular member 20 and protector body 70), the installation and energization of seal 130 requires comparatively little force.

Seal 130 may be installed on thread protector 60 either before or after protector 60 is installed on tubular member 20. Seal 130 may also be removed from protector 60 and replaced without removing protector 60 from tubular member 20. The location of seal 130 on the exterior of thread protector 60 also enables easy inspection of the seal before, during, and after use to verify seal integrity.

In addition to the features described above, thread protector 60 may be installed or removed from tubular member 20 without affecting a coating (not shown) that may be applied to threads 50. Internal threads 100 of thread protector 60 may be designed to engage only the portion of threads 50 that are farthest from leading edge 45 of pin end 10. Therefore a coating applied to threads 50 that are closest to leading edge 45 of pin end 10 will not be adversely affected or substantially degraded by installation or removal of thread protector 60. A coating is adversely affected or substantially degraded if it requires re-application or it no longer protects the underlying material from corrosion.

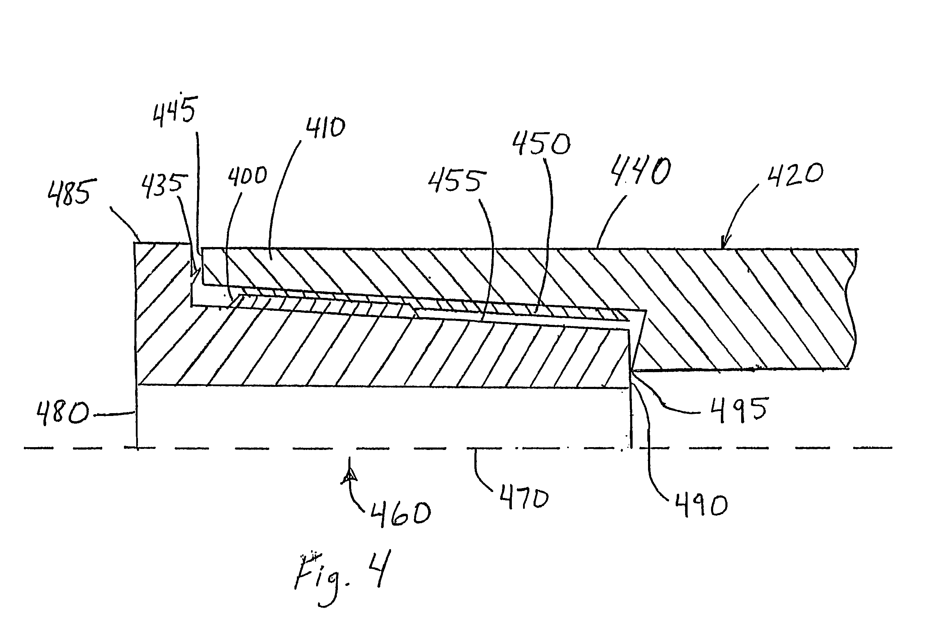

Referring now to Figure 4 which is not part of the invention, a box end 410 of a tubular member 420 is shown. Tubular member 420 has exterior surface 440 and interior surface 430, including threads 450. A thread protector 460 is disposed within box end 410. Thread protector 460 is preferably constructed from a durable material suitable to protect box end 410 and threads 450 from damage during handling. Thread protector 460 includes a protector body 470 having a first end 480 and a second end 490. First end 480 includes flange 485 with seal 435. Protector body 470 preferably has external threads 400 adapted to engage threads 450. Protector body 470 also preferably has exterior surface 455 that is recessed to avoid contact with threads 450 when thread protector 460 is removed from box end 410 of tubular member 420. This permits thread protector 460 to be removed from box end 410 without adversely affecting or substantially degrading a coating (not shown) that may be applied to threads 450 that are closest to leading edge 445. Seal 435 engages leading edge 445 of box end 410 around the circumference of leading edge 445 and isolates threads 450 from the outside environment and prevents external liquids or debris from contacting threads 450. Second end 490 engages shoulder 495 on interior surface 430 of tubular member 420 to further isolate threads 450 from the outside environment.

Various methods of use may employ thread protectors 60 and 460. For example, a method of manufacturing a threaded tubular member may employ thread protectors 60 and 460 to protect the threads while the threads are still in the clean environment of the manufacturing facility. By installing thread protectors 60 and 460 soon after the threads have been machined, the threads are protected from contaminants from the outside environment and will be less likely to be damaged. Other methods of use include cleaning and drying tubular member threads that may have been previously contaminated with debris or liquid and then installing thread protectors 60 and 460. Use of thread protectors 60 and 460 will reduce the need for a protective coating on the threads because the threads are isolated from the environment and will be less likely to corrode. However, thread protectors 60 and 460 are designed so that if a protective coating is applied to the threads, installation or removal of thread protectors 60 and 460 will not adversely affect or substantially degrade the coating.

While various preferred embodiments of the invention have been shown and described, modifications thereof can be made by one skilled in the art without departing from the claims. The embodiments herein are exemplary only, and are not limiting. Many variations and modifications of the apparatus and methods disclosed herein are possible if remaining within the scope of the invention. Accordingly, the scope of protection is not limited by the description set out above, but is only limited by the claims which follow.

## Claims

1. A method for protecting a tubular member (20) with threads (50) the method comprising:
installing a thread protector (60) comprising a body (70) having an open end (90), a closed end (80), and an outer surface (110); wherein the closed end (80) comprises a first seal (135) engaging a leading edge (45) of the tubular member (20) and the open end (90) defines an aperture (95) adapted to engage the threads (50) of the tubular member (20);
installing a second seal member (130) extending around the open end (90) of the protector body (70); wherein the second seal member (130) comprises a first portion (140) extending along the outer surface (110) of the protector body (70) and a second portion (50) extending radially from the first portion (140) into the aperture (95), and into sealing engagement with the tubular member (20) such that the first seal (135) and second seal member (130) isolate the threads (50) from the outside environment and prevent an external liquid or debris from contacting the threads (50);
**characterized by**:
the second portion (50) of the second seal member (130) further comprising an increased thickness sealing lip (180) disposed on an inner edge of the second portion (150); wherein the sealing lip (180) comprises a sealing surface (190) contacting the tubular member (20) and an inside surface (210) substantially perpendicular to the sealing surface (190), parallel to the open end (90) of the protector body (70), and contacting an end face (220) of the body (70).

2. The method of claim 1 wherein the second seal member (130) and thread protector (60) are installed simultaneously.

3. The method of claim 1 wherein the thread protector (60) is installed before the second seal member (130) is installed.

4. The method of claim 1 further comprising removing the second seal member (130) from the protector body (70) without removing the thread protector (60) from the tubular member (20) and installing a replacement second seal member (130) on the protector body (70).

5. The method of claim 1 wherein said protector body (70) further comprises a seal groove (120) in the outer surface (110) and the second seal member (130) further includes a tab (170) extending radially from the first portion (140), wherein the tab (170) engages the seal groove (120) when the second seal member (130) is installed on the thread protector (60).

6. The method of claim 1 further comprising:
cleaning the threads (50) to remove debris and drying the threads (50) to remove liquid prior to installing the thread protector..

7. The method of claim 1 further comprising:
applying a coating to the threads (50) of the tubular member (20) prior to installing the thread protector (60).

8. The method of claim 7 further comprising:
transporting the tubular member (20) from a first location to a second location; and
removing the thread protector (60).

## Patentansprüche

1. Verfahren zum Schützen eines röhrenförmigen Elements (20) mit Gewindegängen (50), wobei das Verfahren folgendes aufweist:
das Anbringen einer Gewindeschutzeinrichtung (60), die einen Körper (70) aufweist mit einem offenen Ende (90), einem geschlossenen Ende (80), und einer äußeren Oberfläche (110); wobei das geschlossene Ende (80) eine erste Dichtung (135) aufweist, die mit einer Stirnkante (45) des röhrenförmigen Elements (20) in Eingriff tritt, und das offene Ende (90) eine Öffnung (95) abgrenzt, die zum Eingriff mit den Gewindegängen (50) des röhrenförmigen Elements (20) angepasst ist;
das Anbringen eines zweiten Dichtungselements (130), welches sich um das offene Ende (90) des Gewindeschutzeinrichtungskörpers (70) herum erstreckt; wobei das zweite Dichtungselement (130) einen ersten Abschnitt (140) aufweist, der sich entlang der äußeren Oberfläche (110) des Schutzeinrichtungskörpers (70) erstreckt, und einen zweiten Abschnitt (50), der sich radial von dem ersten Abschnitt (140) in die Öffnung (50) hinein erstreckt, und in Dichtungseingriff mit dem röhrenförmigen Element (20) tritt, sodass die erste Dichtung (135) und das zweite Dichtungselement (130) die Gewindegänge (50) von der äußeren Umgebung isolieren und verhindern, dass eine externe Flüssigkeit oder Schmutz mit den Gewindegängen (50) in Kontakt tritt;
**dadurch gekennzeichnet, dass**:
der zweite Abschnitt (50) des zweiten Dichtungselements (130) weiterhin eine Dichtlippe (180) mit zunehmender Dicke aufweist, die an einer inneren Kante des zweiten Abschnitts (150) angeordnet ist; wobei die Dichtlippe (180) eine Dichtungsoberfläche (190) aufweist, welche das röhrenförmige Element (20) kontaktiert, sowie eine innere Oberfläche (210), die im Wesentlichen senkrecht zu der Dichtoberfläche (190) und parallel zu dem offenen Ende (90) des Schutzeinrichtungskörpers (70) ist, und eine Stirnfläche (220) des Körpers (70) kontaktiert.

2. Verfahren gemäß Anspruch 1, wobei das zweite Dichtungselement (130) und die Gewindeschutzeinrichtung (60) gleichzeitig angebracht werden.

3. Verfahren gemäß Anspruch 1, wobei die Gewindeschutzeinrichtung (60) vor dem zweiten Dichtungselement (130) angebracht wird.

4. Verfahren gemäß Anspruch 1, welches weiterhin beinhaltet, dass das zweite Dichtungselement (130) von dem Schutzeinrichtungskörper (70) entfernt wird ohne die Gewindeschutzeinrichtung (60) von dem röhrenförmigen Element (20) zu entfernen, und ein zweites Ersatzdichtungselement (130) auf dem Schutzeinrichtungskörper (70) angeordnet wird.

5. Verfahren gemäß Anspruch 1, wobei der Schutzeinrichtungskörper (70) weiterhin eine Dichtungsnut (120) auf der äußeren Oberfläche (110) aufweist, und das zweite Dichtungselement (130) weiterhin einen Vorsprung (170) aufweist, der sich radial von dem ersten Abschnitt (140) erstreckt, wobei der Vorsprung mit der Dichtungsnut (120) in Eingriff tritt, wenn das zweite Dichtungselement (130) auf der Gewindeschutzeinrichtung (60) angebracht ist.

6. Verfahren gemäß Anspruch 1, welches weiterhin beinhaltet:
das Reinigen der Gewindegänge (50), um Schmutz zu entfernen, und das Trocknen der Gewindegänge (50), um Flüssigkeit zu entfernen, bevor die Gewindeschutzeinrichtung befestigt wird.

7. Verfahren gemäß Anspruch 1, welches weiterhin beinhaltet:
das Anbringen einer Beschichtung auf die Gewindegänge (50) des röhrenförmigen Elements (20), bevor die Gewindeschutzeinrichtung (60) angebracht wird.

8. Verfahren gemäß Anspruch 7, welches weiterhin beinhaltet:
das Transportieren des röhrenförmigen Elements (20) von einem ersten Ort zu einem zweiten Ort; und
das Entfernen der Gewindeschutzeinrichtung (60).

## Revendications

1. Procédé pour protéger un élément tubulaire (20) comportant des filets (50), le procédé comprenant :
l'installation d'un élément de protection de filets (60) comprenant un corps (70) comportant une extrémité ouverte (90), une extrémité fermée (80) et une surface extérieure (110) ; dans lequel l'extrémité fermée (80) comprend un premier joint (135) en prise avec un bord avant (45) de l'élément tubulaire (20) et l'extrémité ouverte (90) définit une ouverture (95) conçue pour venir en prise avec les filets (50) de l'élément tubulaire (20) ;
l'installation d'un deuxième élément formant joint (130) s'étendant autour de l'extrémité ouverte (90) du corps de protection (70) ; dans lequel le deuxième élément formant joint (130) comprend une première partie (140) s'étendant le long de la surface extérieure (110) du corps de protection (70) et une deuxième partie (50) s'étendant radialement de la première partie (140) dans l'ouverture (95), et en prise étanche avec l'élément tubulaire (20) de sorte que le premier joint (135) et le deuxième élément formant joint (130) isolent les filets (50) de l'environnement extérieur et empêchent qu'un liquide ou des débris extérieurs ne viennent en contact avec les filets (50) ;
**caractérisé en ce que**
la deuxième partie (50) du deuxième élément formant joint (130) comporte en outre une lèvre d'étanchéité (180) d'une plus grande épaisseur disposée sur un bord intérieur de la deuxième partie (150) ; dans lequel la lèvre d'étanchéité (180) comprend une surface d'étanchéité (190) en contact avec l'élément tubulaire (20) et une surface intérieure (210) sensiblement perpendiculaire à la surface d'étanchéité (190), parallèle à l'extrémité ouverte (90) du corps de protection (70), et en contact avec une face d'extrémité (220) du corps (70).

2. Procédé selon la revendication 1, dans lequel le deuxième élément formant joint (130) et l'élément de protection de filets (60) sont installés simultanément.

3. Procédé selon la revendication 1, dans lequel l'élément de protection de filets (60) est installé avant que le deuxième élément formant joint (130) ne soit installé.

4. Procédé selon la revendication 1, comprenant en outre le retrait du deuxième élément formant joint (130) du corps de protection (70) sans retirer l'élément de protection de filets (60) de l'élément tubulaire (20) et l'installation d'un deuxième élément formant joint (130) de remplacement sur le corps de protection (70).

5. Procédé selon la revendication 1, dans lequel ledit corps de protection (70) comprend en outre une gorge de joint (120) dans la surface extérieure (110) et le deuxième élément formant joint (130) comprend en outre une languette (170) s'étendant radialement de la première partie (140), dans lequel la languette (170) vient en prise avec la gorge de joint (120) lorsque le deuxième élément formant joint (130) est installé sur l'élément de protection de filets (60).

6. Procédé selon la revendication 1, comprenant en outre :
le nettoyage des filets (50) pour retirer des débris et le séchage des filets (50) pour retirer un liquide avant d'installer l'élément de protection de filets.

7. Procédé selon la revendication 1, comprenant en outre :
l'application d'un revêtement aux filets (50) de l'élément tubulaire (20) avant d'installer l'élément de protection de filets (60).

8. Procédé selon la revendication 7, comprenant en outre :
le transport de l'élément tubulaire (20) d'un premier emplacement à un deuxième emplacement ; et
le retrait de l'élément de protection de filets (60).
